# EUROPEAN PATENT APPLICATION

(11) **EP 3 786 682 A1**
(43) Date of publication of application: **03.03.2021**
(21) Application number: 19756316.6
(22) Date of filing: 16.07.2019
(51) Int. Cl.: G02B 7/02, G02B 7/14, G02B 13/00, G02B 15/10

(54) **LENS STRUCTURE AND AUXILIARY LENS MECHANISM**

(30) Priority: 01.07.2019 CN 201910587135
(71) Applicant: GUANGDONG SIRUI OPTICAL CO., LTD, Zhongshan, Guangdong 528458 (CN)
(72) Inventor: LI, Jie, Zhongshan, Guangdong 528458 (CN); GAN, Chaomin, Zhongshan, Guangdong 528458 (CN)
(74) Representative: Lavoix
(86) International application number: PCT/CN2019/096165
(87) International publication number: WO 2021/000341

(57) **Abstract**

The present application provides a lens structure and an additional lens mechanism, the lens structure includes a lens assembly and a lens mount, the lens assembly includes a lens chamber and a support seat arranged at a bottom thereof, the lens mount is rotatablely connected with the support seat. The present application provides a lens structure and an additional lens mechanism, the lens assembly and the lens mount are divided into two separate parts, the support seat is rotatably connected with the lens mount, i.e., the support seat can conduct rotation relative to the lens mount, enabling the lens assembly to rotate relative to the lens mount, the lens mount can be fixedly connected with the installation body, while the lens assembly can rotate relative to the installation body, ensuring the lens assembly to always rotate in the right direction all the time, so as to adapt to mobile phones of different models.

## Description

### TECHNICAL FIELD

The present application relates to the technical field of photographic accessories of an intelligent device, particular to a lens structure and an additional lens mechanism.

### BACKGROUND

Nowadays, the society is in the information age of rapid development, mobile phones, as communication consumer goods, have become the necessity of people's life. With the development of optoelectronics and precision technology, mobile phones have integrated a variety of functions, typically such as digital photography, on the basis of the original communication functions. In recent years, with the increase in the size of the photosensitive element of the mobile phone camera and the incorporation of the focusing and optical anti-shake technology, the mobile phone has gradually replaced the traditional digital camera as the first choice for people to take pictures in daily life, and the various mobile phones are also developed.

When a mobile phone is used in photographing, the view angle ratio of a video taken by the mobile phone is 16:9, and the view angle ratio can be changed to 2.4:1 through a movie lens, but the view angle ratio is changed to 16:12 when the mobile phone rotates 90 degrees, resulting in unavailability of the video because of the incorrect view angle ratio, so it is necessary to ensure the angle of a movie lens when the movie lens is used.

In the prior art, the movie lens is usually connected with a housing or accessory of a mobile phone through bayonet connection or bolt fixation, whereas direct connection via a bolt is inconvenient to detach; and fastening via a snap joint requires the snap joint to be rotated over 90° to be fastened, and in different directions for mobile phones of different models, therefore, the lens may have an angular difference of 90°, which is adverse to the use of a movie lens.

### SUMMARY

The present application is aimed at providing a lens structure and an additional lens mechanism, to solve the technical problem of maintaining a correct angle of use of a movie lens in the prior art.

To this end, the present application adopts a technical solution of: providing a lens structure including a lens assembly and a lens mount, the lens assembly includes a lens chamber and a support seat arranged at a bottom thereof, and the lens mount is rotatablely connected with the support seat.

Further, the lens mount is sleeved on the exterior of the support seat, or the support seat is sleeved on the exterior of the lens mount.

Further, the support seat is a hollow cylindrical ring seat, and the lens mount comprises an accommodation cavity which is a hollow circular accommodation cavity sleeved on the exterior of the support seat.

Further, the support seat is detachably connected with the accommodation cavity through an elastic telescopic assembly.

Further, the elastic telescopic assembly comprises a first elastic member and at least one fixed foot protruding out of the support seat, two ends of the first elastic member abut against the support seat and the fixed foot respectively, an inner wall of the accommodation cavity is provided with a guide slot for the fixed foot to rotate, and the fixed foot can be embedded in the guide slot.

Further, an outer side wall of the support seat is provided with a recess, in which the first elastic member and the fixed foot are arranged, the first elastic member has one end abutting against an inner wall of the recess, and the other end abutting against the fixed foot.

Further, the lens structure further includes an anti-rotation component for limiting the rotation of the lens assembly and the lens mount.

Further, the anti-rotation component includes a second elastic member and a first stop pin connected therewith, the support seat is provided with a concave cavity for accommodating the second elastic member, the first stop pin has one end fixedly connected with the second elastic member and the other end abutting against the lens mount.

Further, the lens mount is provided with at least one limit hole on a side facing towards the lens assembly, and the first stop pin can be inserted in the limit hole.

Further, the lens structure includes at least two limit holes, two of which have an included angle of 90° on the lens mount.

Further, the anti-rotation component further includes a key for driving the first stop pin to move up and down.

The present application further disclosed an additional lens mechanism, including any of the lens structures as stated above and an installation body fitted with an intelligent device, and the lens structure is installed on the intelligent device via the installation body.

Further, the lens mount is detachably installed on the installation body.

Further, a bottom of the lens mount is provided with a second stop pin for limiting the angle of the lens structure and the installation body.

Further, the second stop pin is connected with the lens mount via a third elastic member, and abuts against the side wall of the installation body.

Further, the additional lens mechanism further includes a filter which is detachably fixed on one side of the lens chamber far away from the lens mount.

Further, a soft rubber strip is arranged between the filter and the lens chamber.

The lens structure and additional lens mechanism provided by the present application have the beneficial effects that: compared with the prior art, in the lens structure and additional lens mechanism in the present application, the lens assembly and the lens mount are divided into two separate parts, the support seat is rotatably connected with the lens mount, i.e., the support seat can conduct rotation relative to the lens mount, enabling the lens assembly to rotate relative to the lens mount, the lens mount can be fixedly connected with the installation body, while the lens assembly can rotate relative to the installation body, ensuring the lens assembly to always rotate in the right direction, so as to adapt to mobile phones of different models.

### BRIEF DESCRIPTION OF THE DRAWINGS

In order to make a clearer description of technical solutions in specific implementations of the present invention or prior art, drawings involved in description for the specific implementations or the prior art will be briefly introduced, and apparently, the drawings described below illustrate some implementations of the present invention, for one with ordinary skill in the art, other drawings can also be obtained in accordance with these drawings without delivering creative efforts.
FIG. 1 is a stereoscopic structural view of a lens structure provided in an embodiment of the present application;
FIG. 2 is an explosion view of a lens structure provided in an embodiment of the present application;
FIG. 3 is a top view view of a lens structure provided in an embodiment of the present application;
FIG. 4 is a section view view of the structure along the A-A line in FIG. 3;
FIG. 5 is a stereoscopic structural view of an additional lens mechanism provided in an embodiment of the present application, without showing an intelligent device;
FIG. 6 is an explosion decomposition structural view of an additional lens mechanism provided in an embodiment of the present application, without showing an intelligent device;
FIG. 7 is a stereoscopic structural view of an additional lens mechanism provided in an embodiment of the present application;
FIG. 8 is a rear view of an additional lens mechanism provided in an embodiment of the present application;
FIG. 9 is a section view of the structure along the B-B line in FIG. 8.

Description of reference signs:

1. lens assembly; 2. lens mount; 3. anti-rotation component; 4. installation body; 5. intelligent device; 6. filter; 11. lens chamber; 12. support seat; 13. elastic telescopic assembly; 121. recess; 122. concave cavity; 131. first elastic member; 132. fixed foot; 21. accommodation cavity; 22. second stop pin; 23. third elastic member; 24. buckling bulge; 211. guide slot; 212. limit hole; 31. second elastic member; 32. first stop pin; 33. key; 41. annular buckling slot; 411. notch; 61. soft rubber strip.

### DETAILED DESCRIPTION

Technical solutions of the present invention will be described clearly and completely as follows in conjunction with the drawings, apparently, the described embodiments are just part rather than all embodiments of the present invention. Based on the embodiments in the present invention, all other embodiments obtained by one with ordinary skill in the art without delivering creative efforts shall fall into the protection scope of the present invention.

In the description of the present invention, it should be noted that, orientation or position relationships indicated by terms such as "centre", "upper", "lower", "left", "right", "vertical", "horizontal", "inner", "outer", etc. are orientation or position relationships indicated on the basis of the accompanying drawings, are only intended to facilitate description or simplified description of the present invention, rather than indicating or implying that the involved apparatus or element shall have specific orientations, or be configured and operated specifically, and therefore shall not be construed as limitations to the present invention. In addition, terms such as "first", "second", "third", which are merely intended to deliver description, can not be construed as indicating or implying relative importance.

In the description of the present invention, it should be noted that, unless specified and defined otherwise, the terms of "installation", "interconnection" and "connection" shall be understood in a broad sense, for example, a fixed connection, a removable connection, an integral connection, a mechanical connection, an electrical connection, a direct connection, an indirect connection via intermediate medium, or further, internal communication between two elements, a wireless connection, or a wired connection. Case-by-case interpretation can be made to the above terms in the present invention by one with ordinary skill in the art.

Moreover, technical features involved in different implementations described in the present invention below may be combined with each other as long as no conflicts occur therebetween.

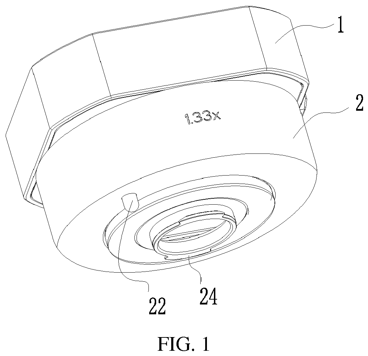

Referring to FIG. 1 to FIG. 4, the lens structure provided by the present application is hereby illustrated. The lens structure includes a lens assembly 1 and a lens mount 2, the lens assembly 1 includes a lens chamber 11 and a support seat 12 arranged at a bottom thereof, the lens mount 2 is rotatablely connected with the support seat 12.

In contrast to the prior art, the lens structure provided by the present application has the lens assembly 1 and the lens mount 2 divided into two separate parts, the support seat 12 is rotatably connected with the lens mount 2, i.e., the support seat 12 can conduct rotation relative to the lens mount 2, enabling the lens assembly 1 to rotate relative to the lens mount 2, the lens mount 2 can be fixedly connected with the installation body 4 while the lens assembly 1 can rotate relative to the installation body 4, ensuring the lens assembly 1 to always rotate in the right direction, so as to adapt to mobile phones of different models.

Specifically, the lens assembly 1 includes lenses of several optical components, e.g., wide angle lenses, portrait lenses or movie lenses, the lens mount 2 is adapted to match with the installation body 4 on an intelligent device 5, thereby realizing connection between the lens structure and the intelligent device 5, wherein rotation of the support seat 12 and the lens mount 2, with respect to relative rotation between the lens assembly 1 and the lens mount 2, requires no change in the axial position of the lens assembly 1, and it only needs to adjust the angle between the lens mount 2 and the support seat 12 to make sure an optical path is always deformed in the right direction.

Referring to FIG. 1 to FIG. 4, the lens structure provided in the present application is hereby illustrated. In the lens structure, the lens mount 2 is sleeved on the exterior of the support seat 12, or the support seat 12 is sleeved on the exterior of the lens mount 2. Specifically, the support seat 12 and the lens mount 2 can realize relative rotation therebetween, generally in a nesting manner, i.e., the lens mount 2 is nested within the support seat 12, in other words, the lens mount 2 is provided with an accommodation cavity 21 for accommodating the support seat 12, the support seat 12 can be rotated and fixed within the accommodation cavity 21, thus the lens mount 2 and the support seat 12 can conduct relative rotation through the way of nesting. The support seat 12 can further be nested in the lens mount 2, i.e., the support seat 12 is provided with an accommodation cavity for accommodating the lens mount 2 which can be rotated and fixed in the support seat 12. Certainly, the lens mount 2 can further be provided with a guide rail for the support seat 12 to be rotated and fixed in other embodiments of the present application, as practically required, to which no limitation is imposed herein.

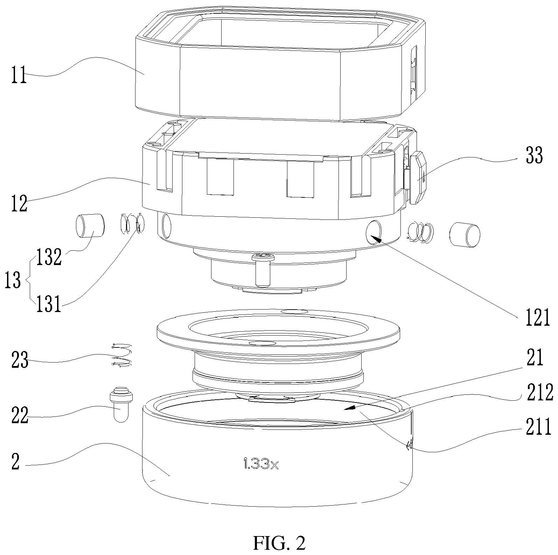

Further, referring to FIG. 2 to FIG. 4, in a specific implementation of the lens structure provided by the present application, the support seat 12 is a hollow cylindrical ring seat, the lens mount 2 includes an accommodation cavity 21, a hollow circular accommodation cavity 21 sleeved on the exterior of the support seat 12. Specifically, the support seat 12 has a section of a circular shape, as with the accommodation cavity 21 which is arranged on the exterior of the support seat 12, in this way it can realize enclosure and protection of the support seat 12 while further enabling fixed connection with the support seat 12. The support seat 12 is a hollow cylindrical ring seat arranged at a bottom of the lens chamber 11 which internally holds several lenses. Certainly, as practically required, the support seat 12 can be further provided with a hollow circular accommodation cavity with the lens mount 2 internally nested, and the support seat 12 and the accommodation cavity 21 can also have a section of a square shape with arc corners or other shapes enabling rotation in other embodiments of the present application, to which no limitation is imposed.

Further, referring to FIG. 2 to FIG. 4, in a specific implementation of the lens structure provided by the present application, the support seat 12 and the accommodation cavity 21 are detachably connected via an elastic telescopic assembly 13. Specifically, the support seat 12 and the accommodation cavity 21 are detachably connected, the elastic telescopic assembly 13 is arranged on an outer side wall of the support seat 12 to change the gap between the support seat 12 and an inner wall of the accommodation cavity 21 through expansion thereof; the elastic telescopic assembly 13 in compression is able to position the support seat 12 in the accommodation cavity 21, after which the elastic telescopic assembly 13 is reset, realizing fixation of the support seat 12 and the accommodation cavity 21, facilitating assembling of the lens assembly 1 and the lens mount 2. The elastic telescopic assembly 13 can be an elastic component enabling assembling of the lens assembly 1 and the lens mount 2, such as elastic pins, elastic snap joints, etc.

The support seat 12 is arranged in the accommodation cavity 21 and is detachably connected with the accommodation cavity 21 via the elastic telescopic assembly 13, so that the support seat 12 can rotate in and detachably connected with the accommodation cavity 21, and that the lens assembly 1 and the lens mount 2 can conduct relative rotation and be detachable, therefore, the elastic telescopic assembly 13 can realize the assembling of the lens assembly 1 and the lens mount 2 in a convenient way. The lens mount 2 can be fixedly connected with the installation body 4, the lens assembly 1 can rotate relative to the installation body 4, ensuring the lens assembly 1 to always rotate in the right direction, so as to adapt to mobile phones of different models.

Further, referring to FIG. 2, in a specific implementation of the lens structure provided by the present application, the elastic telescopic assembly 13 includes a first elastic member 131 and at least one fixed foot 132 protruding out of the support seat 1. Two ends of the first elastic member 131 abut against the support seat 12 and the fixed foot 132 respectively, an inner wall of the accommodation cavity 21 is provided with a guide slot 211 for the fixed foot 132 to rotate, and the fixed foot 132 is embeddable in the guide slot 211. Specifically, the first elastic member 131 has one end abutting against the support seat 12, the other end abutting against the fixed foot 132, the fixed foot 132 may protrude out of the side wall of the support seat 12, and can realize detachment of the support seat 12 and the accommodation cavity 21 conveniently when contracted, and realize fixation of the support seat 12 and the accommodation cavity 21 when stretching out. The guide slot 211 is formed by the inner wall of the accommodation cavity 21 concaved downwards, and the fixed foot 132 can move in the guide slot 211, realizing the rotation between the support seat 12 and the accommodation cavity 21, furthermore, the side wall of the guide slot 211 can define the upward and downward movement of the fixed foot 132, thus fixing the fixed foot 132, and in turn realizing fixation between the support seat 12 and the lens mount 2. Fixing the support seat 12 and the accommodation cavity 21 via the fixed foot 132 facilitates the assembling by making use of the flexible contraction, and the fixed foot 132 can reduce wear during rotation when fitted with the guide slot 211 due to its small size, ensuring the live service of the whole lens structure.

Further, referring to FIG. 2, in a specific implementation of the lens structure provided by the present application, outer side wall of the support seat 12 is provided with a recess 121, for the first elastic member 131 and the fixed foot 132 to be arranged therein, and the first elastic member 131 has one end abuts against the inner wall of the recess 121, and the other end against the fixed foot 132. Specifically, the side wall of the support seat 12 is provided with a recess 121 for accommodating the first elastic member 131 and the fixed foot 132, the first elastic member 131 is usually an elastic component, such as a spring or a rubber pad. The recess 121 can limit the position of the first elastic member 131, so as to avoid the fact that the position of the first elastic member 131 changes during use. The fixed foot 132 is capable of contraction and expansion in the recess 121 driven by the first elastic member 131, the recess 121 can guide the movement of the fixed foot 132 as well, making the fixed foot 132 move back and forth towards one side of the accommodation cavity 21, so as to better realize the fixation of the support seat 12 and accommodation cavity 21, and may enhance rotational friction between the support seat 12 and the accommodation cavity 21, making the rotation more perceptible during hand operation.

Further, referring to FIG. 1 to FIG. 4, in a specific implementation of the lens structure provided by the present application, the lens structure further includes an anti-rotation component 3 for limiting the rotation of the lens assembly 1 and the lens mount 2. Specifically, the anti-rotation component 3 is used to limit the rotation between the lens assembly 1 and the lens mount 2, preventing rotation of the lens assembly 1 due to careless repeated operation or loosening after the lens assembly 1 has rotated over a proper angle, guaranteeing stability of the lens assembly 1 in use, thus ensuring the use effect of the overall lens structure. The anti-rotation component 3 can be a snap joint structure, a pin structure or other detachable structures, and can further be a fixed structure like a bolt, to which no limitation is imposed.

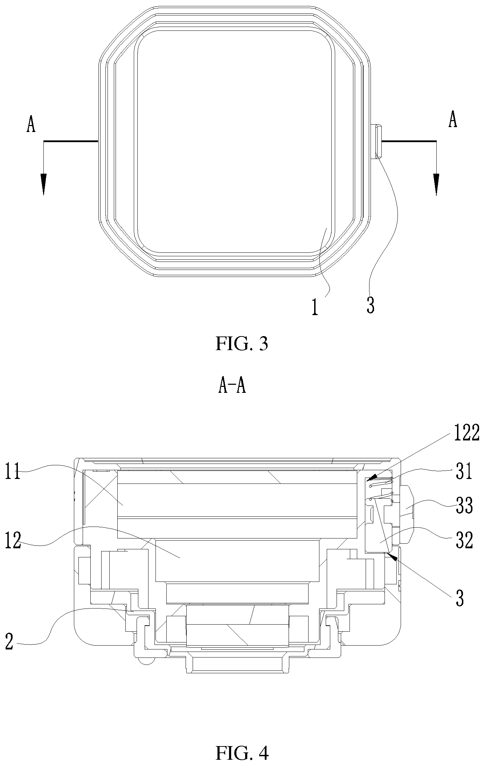

Further, referring to FIG. 2 and FIG. 4, in a specific implementation of the lens structure provided by the present application, the anti-rotation component 3 includes a second elastic member 31 and first stop pin 32 connected therewith, the support seat 12 is provided with a concave cavity 122 for accommodating the second elastic member 31, the first stop pin 32 has one end fixedly connected with the second elastic member 31, the other end abutting against the lens mount 2. Specifically, the second elastic member 31 is arranged in the concave cavity 122, and the second elastic member 31 may have one end abutting against an inner wall of the concave cavity 122, and the other end fixedly connected with the first stop pin 32 which may move along the concave cavity 122 and abut against the lens snap joint, thus realizing fixed connection of the lens mount 2 and the support seat 12 via the first stop pin 32. The second elastic member 31 is usually an elastic component, such as a spring or a rubber pad. Certainly, as practically required, in other embodiments of the present application, the anti-rotation component 3 may further be a snap joint or a hook structure, to which no limitation is imposed.

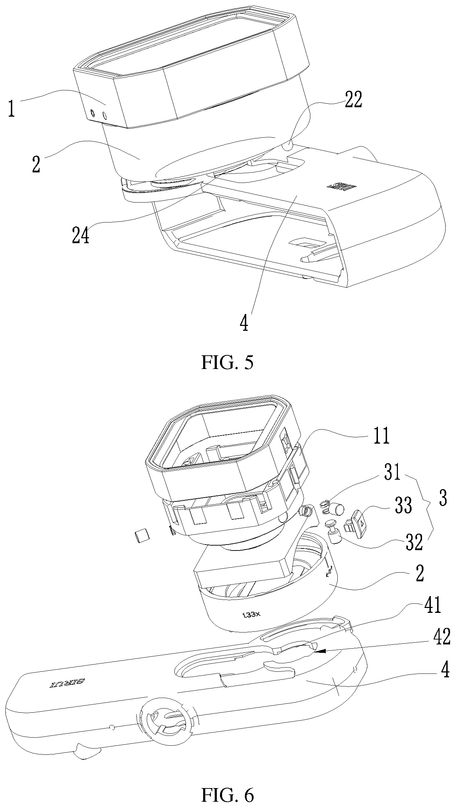

Further, referring to FIG. 2 and FIG. 5, in a specific implementation of the lens structure provided by the present application, the lens mount 2 is provided with at least one limit hole 212 on a side facing towards the lens assembly 1, and the first stop pin 32 can be inserted in the limit hole 212. Specifically, the limit hole 212 is used to be joined with the first stop pin 32 which can be inserted therein, so that the first stop pin 32 is unable to rotate along with rotation of the support seat 12, and thus delivers a desirable limitation effect, wherein the limit hole 212 may be arranged at multiple positions, for instance, on the outskirt of the lens mount 2 spaced apart evenly; there may be multiple limit holes 212 unevenly arranged at certain positions, when the first stop pin 32 is inserted in the limit holes 212, the lens structure can be applied to an intelligent device 5 of one or more models.

Further, referring to FIG. 2, in a specific implementation of the lens structure provided by the present application, the lens structure includes at least two limit holes 212, two of which have an included angle of 90° on the lens mount. Specifically, in the prior art, the lens may have an angular difference of 90°, because a snap joint has to be rotated over 90° to be fastened, and in different directions for mobile phones of different models. Therefore, the lens structure can be provided with two limit holes 212 which are located on the lens mount 2 and have an angular difference of 90°, thus solving the problem that the snap joint needs to be rotated over 90° to be fastened and in different directions. Certainly, as practically required, in other embodiments of the present application, other limit holes 212 may be further arranged to be adapted to mobile phones of different models, to which no limitation is imposed.

Further, referring to FIG. 2 and FIG. 4, in a specific implementation of the lens structure provided by the present application, the anti-rotation component 3 further includes a key 33 for driving the first stop pin 32 to move up and down. Specifically, the key 33 may be fixedly connected with the first stop pin 32 which may move up and down driven by the key 33, so as to control the relative rotation of the lens assembly 1 and the lens mount 2 via the key 33. The second elastic member 31 is compressed up until the lens assembly 1 rotates to a proper position, and when the lens assembly 1 arrives at the limit hole 212 during rotation, the first stop pin 32 may fall into the limit hole 212 due to the restoring force of the second elastic member 31, in this way the limit hole 212 limits the movement of the first stop pin 32, and thus the rotation of the lens assembly 1, thereby realizing automatic buckling; and when the lens assembly 1 rotates, the key 33 allows the first stop pin 32 to be elevated and leave the limit hole 212, allowing the lens assembly 1 to proceed with the rotation.

Preferably, the key 33 is fastened on the first stop pin 32, and the lens mount 2 is provided with a via hole for the key 33 to pass through. Specifically, the key 33 is connected with the first stop pin 32 via a snap joint, and is arranged on the outer side of the lens mount 2. And the via hole usually has a shape of a strip or a waist, facilitating the up and down movement of the key 33, and is easier to control.

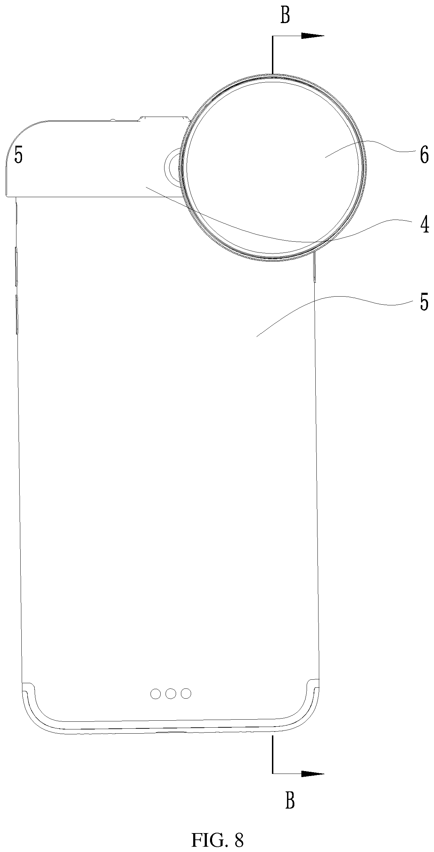

Referring to FIG. 5 to FIG. 9, the present application further provides an additional lens mechanism, which includes the lens structure in any of the above embodiment and an installation body 4 fitted with an intelligent device 5, and the lens structure is installed on the intelligent device 5 via the installation body 4.

In the additional lens mechanism provided by the present application, the lens assembly 1 and the lens mount 2 are divided into two separate parts, the support seat 12 is arranged in the accommodation cavity 21 and is detachably connected with the latter through the elastic telescopic assembly 13, enabling the support seat 12 to rotate in the accommodation cavity 21, and the support seat 12 may be detachable from the accommodation cavity 21, allowing the lens assembly 1 and the lens mount 2 to realize relative rotation and detachment, the elastic telescopic assembly 13 can realize convenient assembling of the lens assembly 1 and the lens mount 2. The lens mount 2 may be fixedly connected with the installation body 4, and the lens assembly 1 may rotate relative to the installation body 4, ensuring the lens assembly 1 to always rotate in the right direction, so as to adapt to mobile phones of different models.

Specifically, the installation body 4 is usually directly sleeved on the intelligent device 5, and fastened, bonded or integrally-moulded with the lens structure, so as to fixedly connect the lens structure with the intelligent device 5, and the installation body 4 may be a housing of the intelligent device 5, or a fixing sleeve stuck or sleeved on the intelligent device 5.

Further, referring to FIG. 5 to FIG. 9, in a specific implementation of the additional lens mechanism provided by the present application, the lens mount 2 is detachably installed on the installation body 4. Specifically, the installation body 4 and the lens mount 2 are detachable, so that the detachment and assembling can be facilitated. The installation body 4 is provided with an annular buckling slot 41 which is provided with a notch 411; the lens mount 2 is provided with an buckling bulge 24 on the outskirt of its bottom, the buckling bulge 24 is capable of entering the annular buckling slot 41 through the notch 411, and rotating within the annular buckling slot 41, enabling the buckling bulge 24 to abut against the inner wall of the annular buckling slot 41, realizing fixation through buckling. Certainly, as practically required, in other embodiments of the present application, the lens mount 2 may further be installed on the installation body 4 in other detachable manner, to which no limitation is imposed.

Further, referring to FIG. 5, in a specific implementation of the additional lens mechanism provided by the present application, the bottom of the lens mount 2 is provided with a second stop pin 22 for limiting the angle of the lens structure and the installation body 4. Specifically, the second stop pin 22 is arranged at the bottom of the lens mount 2 for limiting the relative rotation between the lens structure and the installation body 4, and is usually a bulge which protrudes out of the lens mount 2 and may abut against the side wall of the installation body 4, or the installation body 4 is provided with a recess or a stopper fitted with the bulge, limiting the position of the lens structure, thus limiting the angel between the lens structure and the installation body 4.

Further, referring to FIG. 2 and FIG. 5, in a specific implementation of the additional lens mechanism provided by the present application, the second stop pin 22 is connected with the lens mount 2 via a third elastic member 23, and the second stop pin 22 abuts against the installation body 4. Specifically, the third elastic member 23 may drive the second stop pin 22 to move elastically, the bottom of the lens mount 2 is provided with a through hole for accommodating the third elastic member 23 and the second stop pin 22, the second stop pin 22 can move up and down in the through hole, and adoption of the third elastic member 23 may facilitate detachment of the lens mount 2.

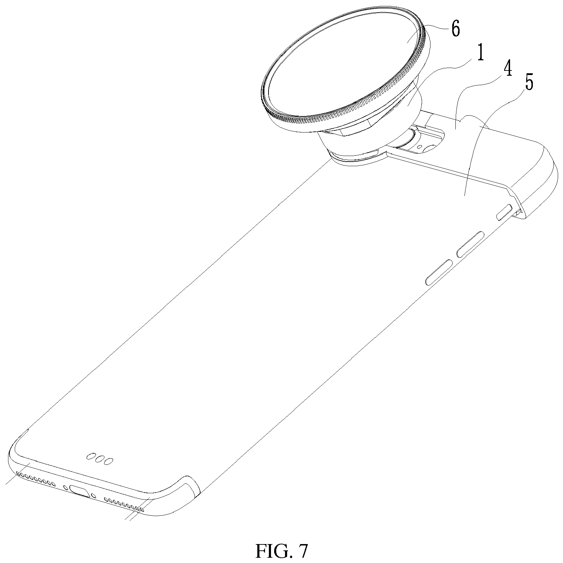

Further, referring to FIG. 7 to FIG. 9, in a specific implementation of the additional lens mechanism provided by the present application, the additional lens mechanism further includes a filter 6 which is detachably fixed on one side of the lens chamber 11 far away from the lens mount 2. Specifically, the lens mechanism is usually provided in a sleeved manner with the filter 6 which can improve the photographing effect of the lens mechanism. The filter 6 is often directly fixed on the lens assembly 1, and is detachably connected with the lens assembly 1. The filter 6 comes in many types, generally a CPL (circular polarizing filter) or an adjustable ND (neutral density filter), etc. The filter 6 may need to rotate during use, the anti-rotation component 3 may further ensure no rotation of the lens assembly 1 along with that of the filter 6, guaranteeing a right angle of the lens assembly 1 throughout.

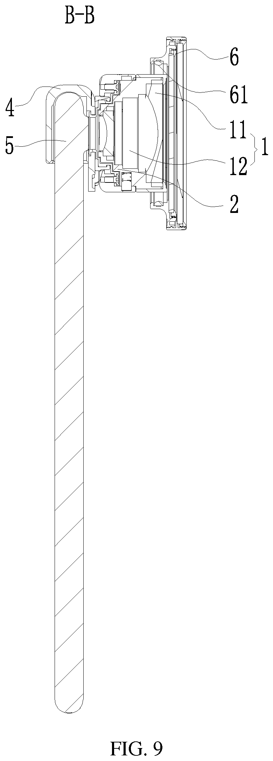

Further, referring to FIG. 9, in a specific implementation of the additional lens mechanism provided by the present application, the filter 6 and the lens chamber 11 are provided with a soft rubber strip 61 therebetween. Specifically, a concave cavity 122 in the filter 6, usually in a circular shape, is sleeved on the lens chamber 11, and the soft rubber strip 61 is arranged in the concave cavity 122 and outside the lens chamber 11, so as to obtain a proper insertion and extraction force through interference fit of the soft rubber strip 61, facilitate the connection of the lens chamber 11 and the filter 6, and reduce the size of the filter 6.

Obviously, the above embodiments are merely intended to clearly illustrate rather than limit the numerated implementations. For one with ordinary skill in the art, other different forms of modifications or changes may further be made on the basis of the aforementioned descriptions. It is unnecessary and impossible to exhaust all implementations. And modifications or changes derived herefrom obviously fall into the protection scope of the present invention.

## Claims

1. A lens structure, **characterized in** comprising
a lens assembly (1), comprising a lens chamber (11) and a support seat (12) arranged at a bottom thereof, and
a lens mount (2), rotatablely connected with the support seat (12).

2. The lens structure in accordance with claim 1, **characterized in that**: the lens mount (2) is sleeved on the exterior of the support seat (12), or the support seat (12) is sleeved on the exterior of the lens mount (2).

3. The lens structure in accordance with claim 2, **characterized in that**: the support seat (12) is a hollow cylindrical ring seat, and the lens mount (2) comprises an accommodation cavity (21) which is a hollow circular accommodation cavity (21) sleeved on the exterior of the support seat (12).

4. The lens structure in accordance with claim 3, **characterized in that**: the support seat (12) is detachably connected with the accommodation cavity (21) through an elastic telescopic assembly (13).

5. The lens structure in accordance with claim 4, **characterized in that**: the elastic telescopic assembly (13) comprises a first elastic member (131) and at least one fixed foot (132) protruding out of the support seat (12), two ends of the first elastic member (131) abut against the support seat (12) and the fixed foot (132) respectively, an inner wall of the accommodation cavity (21) is provided with a guide slot (211) for the fixed foot (132) to rotate, and the fixed foot (132) is embeddable in the guide slot (211).

6. The lens structure in accordance with claim 5, **characterized in that**: an outer side wall of the support seat (12) is provided with a recess (121), in which the first elastic member (131) and the fixed foot (132) are arranged, the first elastic member (131) has one end abutting against an inner wall of the recess (121), and the other end abutting against the fixed foot (132).

7. The lens structure in accordance with any of claims 1-6, **characterized in** further comprising an anti-rotation component (3) for limiting the rotation of the lens assembly (1) and the lens mount (2).

8. The lens structure in accordance with claim 7, **characterized in that**: the anti-rotation component (3) comprises a second elastic member (31) and a first stop pin (32) connected therewith, the support seat (12) is provided with a concave cavity (122) for accommodating the second elastic member (31), the first stop pin (32) has one end fixedly connected with the second elastic member (31) and the other end abutting against the lens mount (2).

9. The lens structure in accordance with claim 8, **characterized in that**: the lens mount (2) is provided with at least one limit hole (212) on a side facing towards the lens assembly (1), and the first stop pin (32) is insertable in the limit hole (212).

10. The lens structure in accordance with claim 9, **characterized in** comprising at least two limit holes (212), two of which have an included angle of 90° on the lens mount.

11. The lens structure in accordance with claim 8, **characterized in that**: the anti-rotation component (3) further comprises a key (33) for driving the first stop pin (32) to move up and down.

12. An additional lens mechanism, **characterized in** comprising the lens structure in any of claims 1-11 and an installation body (4) fitted with an intelligent device (5), and the lens structure is installed on the intelligent device (5) via the installation body (4).

13. The additional lens mechanism in accordance with claim 12, **characterized in that**: the lens mount (2) is detachably installed on the installation body (4).

14. The additional lens mechanism in accordance with claim 12, **characterized in that**: a bottom of the lens mount (2) is provided with a second stop pin (22) for limiting the angle of the lens structure and the installation body (4).

15. The additional lens mechanism in accordance with claim 14, **characterized in that**: the second stop pin (22) is connected with the lens mount (2) via a third elastic member (23), and abuts against the side wall of the installation body (4).

16. The additional lens mechanism in accordance with claim 12, **characterized in** further comprising a filter (6) which is detachably fixed on one side of the lens chamber (11) far away from the lens mount (2).

17. The additional lens mechanism in accordance with claim 16, **characterized in that**: a soft rubber strip (61) is arranged between the filter (6) and the lens chamber (11).
